(19) Europäisches Patentamt

European Patent Office

Office européen des brevets

(11) **EP 4 553 925 B1**

(12) **EUROPEAN PATENT SPECIFICATION**

(45) Date of publication and mention
of the grant of the patent:
**29.04.2026 Bulletin 2026/18**

(21) Application number: **24212033.5**

(22) Date of filing: **11.11.2024**

(51) International Patent Classification (IPC):
*H01M 4/485* (2010.01)    *H01M 4/587* (2010.01)
*H01M 10/0525* (2010.01)    *H01M 4/02* (2006.01)

(52) Cooperative Patent Classification (CPC):
**H01M 4/587; H01M 4/485; H01M 10/0525;**
H01M 2004/021; H01M 2004/027; Y02E 60/10

(54) **NEGATIVE ELECTRODE ACTIVE MATERIAL, NEGATIVE ELECTRODE SHEET, ENERGY STORAGE DEVICE AND ELECTRICITY-CONSUMPTION DEVICE**

NEGATIVELEKTRODENAKTIVMATERIAL, NEGATIVELEKTRODENFOLIE, ENERGIESPEICHERVORRICHTUNG UND STROMVERBRAUCHSVORRICHTUNG

MATÉRIAU ACTIF D'ÉLECTRODE NÉGATIVE, FEUILLE D'ÉLECTRODE NÉGATIVE, DISPOSITIF DE STOCKAGE D'ÉNERGIE ET DISPOSITIF DE CONSOMMATION D'ÉLECTRICITÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **13.11.2023 CN 202311510087**

(43) Date of publication of application:
**14.05.2025 Bulletin 2025/20**

(73) Proprietor: **Hithium Tech HK Limited
Hong Kong (HK)**

(72) Inventors:
• **FAN, Siqin
Xiamen, 361100 (CN)**
• **ZHANG, Qin
Xiamen, 361100 (CN)**
• **LEI, Shun
Xiamen, 361100 (CN)**

(74) Representative: **RGTH
Patentanwälte PartGmbB
Neuer Wall 10
20354 Hamburg (DE)**

(56) References cited:
**US-A1- 2009 196 816    US-A1- 2014 227 522
US-A1- 2021 057 736    US-A1- 2023 304 151**

## Description

### TECHNICAL FIELD

The present disclosure relates to the field of energy storage technology, and particularly relates to a negative electrode active material, a negative electrode sheet, an energy storage device and an electricity-consumption device.

### BACKGROUND

Fossil energy is still the main way of global energy consumption. Energy storage is of great significance to human development. Energy storage mainly comprises physical energy storage and electrochemical energy storage. The electrochemical energy storage is the fastest growing energy storage method in the past decade, and secondary batteries occupy the dominant position in electrochemical energy storage. Secondary batteries, also known as rechargeable batteries or storage batteries, refer to batteries that can be reused by charging to activate active substances after the battery is discharged. Specifically, by utilizing the reversibility of chemical reactions, a new battery can be formed. That is, after it is converted into electrical energy by a chemical reaction, the chemical system can be repaired by electrical energy, and then it is converted into electrical energy by chemical reactions, so it is called a secondary battery (rechargeable battery).

The main rechargeable batteries on the market comprise nickel-hydrogen batteries, nickel-cadmium batteries, lead-acid (or lead storage) batteries, lithium-ion batteries, and polymer lithium-ion batteries etc. The lithium-ion batteries have the advantages of high energy density, safety and reliability, and environmental protection. They are widely used in transportation power supply, electric energy storage system, 3C products, aerospace and military industries, etc.

With the development of lithium-ion batteries, the market has put forward higher and higher requirements for the energy density of lithium-ion batteries. However, the increase in energy density will also lead to the degradation of the kinetic performance of lithium-ion batteries. From a technical perspective, it is difficult to achieve perfect compatibility between high energy density and high kinetic performance.

Related technologies are known from a patent application publication no. US2023304151A1; a patent application publication no. US2021057736A1; a patent application publication no. US20090196816A1; and a patent application publication no.

### SUMMARY

In view of the above problems, the present disclosure provides a negative electrode active material, a negative electrode sheet, an energy storage device and an electricity-consumption device. The negative electrode active material has pores with a specific pore size distribution, which can make the negative electrode sheet have better liquid absorption capacity and better electronic conductivity, and is favorable to balance the energy density and kinetic performance of the battery.

The invention is defined by the independent claims. The technical solution is as follows:

A negative electrode active material, comprising mesopores with a pore size of 2nm to 50nm and macropores with a pore size of 100nm to 200nm;

where a percentage of total mesopore volume is A, a percentage of total macropore volume is B, and B/A satisfies: $3.0 \leq B/A \leq 5.0$.

It is found that the mesoporous structure with a pore size of 2nm-50nm can effectively improve the liquid absorption capacity and electron conductivity of the negative electrode active material, thereby improving the kinetic performance of the battery. The macroporous structure with a pore size of 100nm-200nm can effectively buffer the damage to the interlayer structure caused by the expansion between the negative electrode active layers during the battery cycle, thereby improving the battery cycle performance. In addition, when there are too few pore structures of 2nm to 50nm, the kinetic performance of the battery is insufficient, leading to lithium plating, which in turn decrease the battery cycle performance. When there are too many pore structures of 2nm to 50nm, it can result in excessive consumption of lithium sources during the film formation process, thereby reducing the initial efficiency of the battery. When there are too few pore structures of 100nm to 200nm, the interlayer structure of the active material during the cycle may experience peeling of the active layer due to the intercalation and deintercalation of lithium ions, leading to failure; when there are too many pore structures of 100nm to 200nm, the insufficient kinetic performance will also cause the battery cell to fail due to lithium plating during the cycle. The present invention can make the negative electrode sheet have better liquid absorption capacity and better electronic conductivity through the specific pore size distribution as mentioned above, which is favorable to balance the energy density and kinetic performance of the battery.

In some embodiments, a specific surface area of the negative electrode active material is $1.0m^2/g$ to $2.0m^2/g$. Negative electrode active material that meets this requirement is more conducive to wetting of electrolyte, which in turn facilitates the rate of ion diffusion, and overall improves the cycle performance of the battery.

In some embodiments, the negative electrode active material is selected from at least one of graphite, activated carbon and silicon compound. These negative electrode active materials come from a wide range of sources, have abundant reserves, have more stable electrochemical properties, and the actual specific capacity density can be close to the theoretical specific capacity, which is more conducive to improving the performance of the negative electrode sheet and reducing the cost at the same time.

In some embodiments, sulfur content of the negative electrode active material is less than 5wt%. Controlling the sulfur content of negative electrode active materials is conducive to improving the performance of negative electrode sheet and lithium battery.

The present disclosure also provides a method for preparing the negative electrode active material as described above, comprising the following steps:

forming a mixture containing a carbon source, a catalyst, a conductive agent and a binder to prepare a solid composite; and

graphitizing the solid composite to obtain negative electrode active materials with different pore structures by controlling different graphitization time.

Through the forming process, the raw materials are tightly bonded together. Combined with the graphitization process, the non-graphite carbon is physically changed under high temperature to improve the hexagonal carbon atom plane mesh layer stacking structure, and is transformed into graphite carbon/graphite microcrystals with a three-dimensional regular and ordered structure of graphite. By controlling different graphitization time, negative electrode active materials with different porous structures are obtained, and the volume density, electrical conductivity, thermal conductivity, corrosion resistance and mechanical processing properties of the product are improved by graphitization.

In some embodiments, the pressure of the forming process is 150MPa to 250MPa, which is conducive to pressing the materials together, more stable and convenient for subsequent graphitization.

In some embodiments, the temperature of the graphitization process is 2500°C to 3000°C, and the time is 15h to 50h, which is conducive to improving the degree of graphitization of the product. The better the degree of graphitization, the fewer cracks, and the more conducive to improving the performance of the negative electrode sheet and the lithium battery.

In some embodiments, the carbon source is a coke raw material, and the sulfur content of the coke raw material is less than 5wt%. During the graphitization process, the overflow of sulfur promotes the formation of pores inside the graphite. Controlling the sulfur content of the coke raw material is beneficial to improving the performance of the negative electrode sheet and the lithium battery.

The present disclosure also provides a negative electrode sheet, comprising a negative electrode current collector and at least one negative electrode active layer disposed on a surface of the negative electrode current collector, each of the negative electrode active layers comprises the negative electrode active material as described above or the negative electrode active material obtained according to the above preparation method. The negative electrode sheet has better liquid absorption capacity and better electronic conductivity.

In some embodiments, the negative electrode active layer is single-layered and a thickness is 20nm to 120nm.

In some embodiments, the negative electrode active layer is multi-layered. In a direction away from the negative electrode current collector, the percentage of the total macropore volume of the negative electrode active material in each of the negative electrode active layers tends to decrease layer by layer. The macroporous structure is conducive to reducing the expansion behavior of the material during the cycle, and the mesoporous structure is conducive to the intercalation of lithium ions. The macroporous structures are controlled to gradually decrease in the direction away from the current collector, and the mesoporous structures gradually increase, so that lithium ions are more easily embedded in the negative electrode active material, improving the kinetic performance, wetting performance and cycle performance of the battery. The expansion behavior of the material during the cycle is reduced by the macroporous structure in the negative electrode active material in the direction close to the current collector reduces, thereby further improving the cycle performance. Large volume expansion of the active material during the cycle is avoided, resulting in poor adhesion between the negative electrode active material and the current collector, thereby affecting electron transmission and causing deterioration of the cycle performance.

In some embodiments, the negative electrode active layer is multi-layered. In the direction away from the negative electrode current collector, a thickness of each of the negative electrode active layers tends to decrease layer by layer. This setting is more conducive to improving the liquid absorption capacity and electronic conductivity of the negative electrode sheet, and balancing the energy density and kinetic performance of the battery.

In some embodiment, the negative electrode sheet comprises a negative electrode current collector and a first negative electrode active layer and a second negative electrode active layer sequentially arranged on the surface of the negative electrode current collector. The first negative electrode active layer satisfies: $4.5 \leq B/A \leq 5.0$; and the second negative electrode active layer satisfies: $3.0 \leq B/A < 4.5$, which is conducive to improving the liquid absorption capacity and electronic conductivity of the negative electrode sheet and balancing the energy density and kinetic performance of the battery.

In some embodiments, a thickness ratio of the first negative electrode active layer to the second negative electrode active layer is 1:(0.3~1.1). The upper layer active material is configured to improve the wetting performance of the battery and improve the cycle performance; and the lower layer active material is configured to reduce the expansion behavior of the material during the cycle, and further improve the cycle performance.

In some embodiment, a thickness of the first negative electrode active layer is 20nm~90nm. The thickness is controlled in the range, which is conducive to further improving the liquid absorption capacity and electronic conductivity of the negative electrode sheet and balancing the energy density and kinetic performance of the battery.

In some embodiments, each of the negative electrode active layers further independently comprises a negative electrode conductive agent and a negative electrode binder, respectively. In each of the active layers, the mass percentage of the negative electrode active material is independently 75% to 95%, the mass percentage of the negative electrode conductive agent is independently 2% to 15%, and the mass percentage of the negative electrode binder is independently 3% to 10%.

In some embodiments, each of the negative electrode conductive agents is selected from at least one of carbon nanotubes, carbon nanofibers, conductive graphite, graphene, acetylene black and carbon black, and these conductive agents have the advantages of high conductivity and low resistance.

In some embodiments, each of the negative electrode binders is selected from at least one of styrene-butadiene rubber, carboxymethyl cellulose, polyacrylic acid and polyacrylate, which can better adhere and retain the negative electrode active material on the current collector, enhance the electronic contact between the negative electrode active material and the conductive agent, and between the negative electrode active material and the current collector, and can better disperse, thicken, suspend, bond and facilitate lithium ion transmission.

The present disclosure also provides an energy storage device, comprising the negative electrode active material as described above, or comprising the negative electrode sheet as described above.

The present disclosure also provides an electricity-consumption device, comprising the energy storage device as described above, and the energy storage device supplies power to the electricity-consumption device.

## DETAILED DESCRIPTION

To facilitate understanding of the present disclosure, the present disclosure will be described more fully below. The present disclosure can be implemented in many different forms and is not limited to the embodiments described herein. On the contrary, the purpose of providing these embodiments is to make the understanding of the disclosure of the present disclosure more thorough and comprehensive.

Unless otherwise defined, all technical and scientific terms used herein have the same meaning as the meaning generally understood by those skilled in the art. The terms used in the description of the present disclosure herein are only for the purpose of describing specific embodiments and are not intended to limit the present disclosure. The term "and/or" used herein comprises any and all combinations of one or more related listed items.

In the case of using "comprise", "have", and "comprise" described herein, it is intended to cover non-exclusive inclusions. Another component may be added, unless clear limiting terms such as "only", "consisting of...", etc. are used.

The words "preferably", "more preferably", "optimally", "desirably", etc. in the present disclosure refer to embodiments of the present disclosure that can provide certain beneficial effects in certain circumstances. However, other embodiments may also be preferred in the same or other circumstances. In addition, the statement of one or more preferred embodiments does not imply that other embodiments are not available, nor is it intended to exclude other embodiments from the scope of the present disclosure. That is, in the present disclosure, "preferably", "more preferably", "optimally", "desirably", etc. are only used to describe better implementation methods or embodiments, but do not constitute a limitation on the scope of protection of the present disclosure.

In the present disclosure, "further", "even further", "particularly", etc. are used for descriptive purposes to indicate differences in content, but should not be understood as limiting the scope of protection of the present disclosure.

In the present disclosure, "at least one" means more than one, such as one, two and more than two. "Multiple" or "several" means at least two, such as two, three, etc., and "multilayer" means at least two layers, such as two layers, three layers, etc., unless otherwise clearly and specifically defined. In the description of the present disclosure, "some" means at least one, such as one, two, etc., unless otherwise clearly and specifically defined.

When a numerical range is disclosed herein, the above range is deemed to be continuous and comprises the minimum and maximum values of the range, as well as every value between such minimum and maximum values. Further, when a range refers to an integer, every integer between the minimum and maximum values of the range is comprised. In addition, when multiple ranges are provided to describe features or characteristics, the ranges can be merged. In other words, unless otherwise specified, all ranges disclosed herein should be understood to comprise any and all sub-ranges comprised therein.

Unless otherwise specified, all steps of the present disclosure may be performed sequentially or randomly. For example, the method comprises steps (a) and (b), which means that the method may comprise steps (a) and (b) performed sequentially, or may comprise steps (b) and (a) performed sequentially. For example, the method may also comprise step (c), which means that step (c) may be added to the method in any order. For example, the method may comprise steps (a), (b) and (c), or may comprise steps (a), (c) and (b), or may comprise steps (c), (a) and (b), etc.

Unless otherwise mentioned, a term in the singular may comprise a plural form and cannot be understood as indicating a quantity of one.

In the present disclosure, "above" or "below" comprises the number itself. For example, 1 or less comprises 1.

With the development of lithium-ion batteries, the market has put forward higher and higher requirements for the energy density of lithium-ion batteries. However, the increase in energy density will also lead to the degradation of the kinetic performance of lithium-ion batteries. From a technical perspective, it is difficult to achieve perfect compatibility between high energy density and high kinetic performance.

In view of the above problems, the present disclosure provides a negative electrode active material, a negative electrode sheet, an energy storage device and an electricity-consumption device. The negative electrode active material has pores with a specific pore size distribution, which can make the negative electrode sheet have better liquid absorption capacity and better electronic conductivity, and is favorable to balance the energy density and kinetic performance of the battery.

The technical solution is as follows.

A negative electrode active material comprises mesopores with a pore size of 2nm to 50nm and macropores with a pore size of 100nm to 200nm;

The percentage of total mesopore volume is A, the percentage of total macropore volume is B, and B/A satisfies: $3.0 \leq B/A \leq 5.0$.

The study found that the mesoporous structure with a pore size of 2nm to 50nm can effectively improve the liquid absorption capacity and electronic conductivity of the negative electrode active material, thereby improving the kinetic performance of the battery. The macroporous structure with a pore size of 100nm to 200nm can effectively buffer the damage to the interlayer structure caused by the expansion between the negative electrode active layers during the battery cycle, thereby improving the battery cycle performance. In addition, when there are too few pore structures of 2nm to 50nm, the kinetic performance of the battery is insufficient, leading to lithium plating, which in turn decrease the battery cycle performance. When there are too many pore structures of 2nm to 50nm, it can result in excessive consumption of lithium sources during the film formation process, thereby reducing the initial efficiency of the battery. When there are too few pore structures of 100nm to 200nm, the interlayer structure of the active material during cycling may experience peeling of the active layer (such as graphite layers) due to the intercalation and deintercalation of lithium ions, leading to failure; when there are too many pore structures of 100nm to 200nm, the insufficient kinetic performance will also cause the battery cell to fail due to lithium plating during the cycle. The present disclosure can make the negative electrode sheet have better liquid absorption capacity and better electronic conductivity through the specific pore size distribution as mentioned above, which is favorable to balance the energy density and kinetic performance of the battery.

It can be understood that in the present disclosure, the pore size of the mesopore is 2nm to 50nm, comprising but not limited to 2nm, 4nm, 8nm, 10nm, 15nm, 20nm, 25nm, 30nm, 35nm, 40nm, 45nm or 50nm.

It can be understood that in the present disclosure, the pore size of the macropore is 100nm to 200nm, comprising but not limited to 100nm, 110nm, 120nm, 130nm, 140nm, 150nm, 160nm, 170nm, 18nm, 190nm or 200nm.

It can be understood that in the present disclosure, the percentage of total mesopore volume is A, which refers to the percentage of the total volume of all mesopores in the negative electrode active material to the total volume of all pores in the negative electrode active material; the percentage of total macropore volume is B, which refers to the percentage of the total volume of all macropores in the negative electrode active material to the total volume of all pores in the negative electrode active material.

In some examples, the present disclosure uses the ASAP2460-physical adsorption analyzer as the testing instrument, places the dried and degassed sample in liquid nitrogen, adjusts different test pressures, measures the adsorption amount of nitrogen respectively, and draws the adsorption and desorption isotherms. The shape of the pore is determined according to the shape of the hysteresis loop, and the pore size distribution curve is obtained according to different pore models. The original pore size distribution data is imported into the drawing software, and the peak area of each part is calculated by the peak fitting method, which corresponds to the values of parameters A and B.

It can be understood that in the present disclosure, B/A satisfies: $3.0 \leq B/A \leq 5.0$, comprising but not limited to 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9 or 5.0. In some examples, B/A satisfies: $3.04 \leq B/A \leq 4.95$.

In some embodiments, the specific surface area of the negative electrode active material ranges from $1.0 m^2/g$ to $2.0 m^2/g$. The negative electrode active material that meets this requirement is more conducive to the infiltration of the electrolyte, and thus is conducive to the diffusion rate of ions, thereby improving the overall cycle performance of the battery. It can be understood that the specific surface area of the negative electrode active material comprises but is not limited to 1.0m²/g, 1.2m²/g, 1.4m²/g, 1.5m²/g, 1.6m²/g, 1.8m²/g or 2.0m²/g.

In some embodiments, the type of the negative electrode active material is selected from at least one of graphite, activated carbon and silicon compounds. These negative electrode active materials have a wide range of sources, abundant reserves, relatively stable electrochemical properties, and the actual specific capacity density can be close to the theoretical specific capacity, which is more conducive to improving the performance of the negative electrode sheet while reducing costs. In some examples, the negative electrode active material is graphite.

In some embodiments, the sulfur content of the negative electrode active material is below 5wt%, which is conducive to improving the performance of the negative electrode sheet and the lithium battery. Further, the sulfur content of the negative electrode active material is 0.5wt% to 5wt%.

In some examples, the present disclosure refers to the determination method of sulfur content in Appendix J of GB/T 24533-2019 Lithium-ion Battery Graphite-based Negative Electrode Materials, and uses Shimadzu ICPE-9820 inductively coupled plasma emission spectrometer (ICP-OES) to establish a method for determining the sulfur content in lithium-ion battery graphite negative electrode materials.

The present disclosure also provides a method for preparing the negative electrode active material as described above, comprising the following steps:

Forming a mixture containing a carbon source, a catalyst, a conductive agent and a binder to prepare a solid composite;
Graphitizing the solid composite to obtain negative electrode active materials with different pore structures by controlling different graphitization time.

Through the forming process, the raw materials are tightly bonded together. Combined with the graphitization process, the non-graphite carbon is physically changed under high temperature to improve the hexagonal carbon atom plane mesh layer stacking structure, and is transformed into graphite carbon/graphite microcrystals with a three-dimensional regular and ordered structure of graphite. By controlling different graphitization time, negative electrode active materials with different porous structures are obtained, and the volume density, electrical conductivity, thermal conductivity, corrosion resistance and mechanical processing properties of the product are improved by graphitization.

In some embodiments, the pressure of the forming process ranges from 150MPa to 250MPa, which is conducive to pressing the materials together, more stable and convenient for subsequent graphitization.

In some embodiments, the temperature of the graphitization process ranges from 2500°C to 3000°C, and the time ranges from 15h to 50h, which is conducive to improving the degree of graphitization of the product. The better the degree of graphitization, the fewer cracks, and the more conducive to improving the performance of the negative electrode sheet and the lithium battery.

In some embodiments, the carbon source is a coke raw material, and the sulfur content of the coke raw material is less than 5wt%. During the graphitization process, the overflow of sulfur promotes the formation of pores inside the graphite. Controlling the sulfur content of the coke raw material is beneficial to improving the performance of the negative electrode sheet and the lithium battery. Further, the sulfur content of the coke raw material is 1wt% to 5wt%.

It can be understood that the catalyst described in the present disclosure is a catalyst conventionally used in the preparation of negative electrode active materials in the field, and no requirements are made for this. For example, the catalyst is ferroferric oxide.

Similarly, the conductive agent for preparing negative electrode active materials described in the present disclosure is a conductive agent conventionally used in the preparation of negative electrode active materials in the field, and no requirements are made for this. For example, the conductive agent for preparing negative electrode active materials is conductive carbon black.

Similarly, the binder for preparing negative electrode active materials described in the present disclosure is a binder conventionally used in the preparation of negative electrode active materials in the field, and no requirements are made for this. For example, the binder for preparing negative electrode active materials is asphalt.

The present disclosure also provides a negative electrode sheet, comprising: a negative electrode current collector and at least one negative electrode active layer disposed on the surface of the negative electrode current collector. Each of the negative electrode active layers comprises the negative electrode active material as described above, or a negative electrode active material prepared according to the above preparation method. The negative electrode sheet has better liquid absorption capacity and better electronic conductivity.

In some embodiments, the number of layers of the negative electrode active layer is one layer, and the thickness ranges from 20nm to 120nm, comprising but not limited to 20nm, 40nm, 50nm, 60nm, 80nm, 90nm, 100nm, 110nm or 120nm.

In some embodiments, the negative electrode active layer is multi-layered, and the percentage of the total macropore volume of the negative electrode active material in each of the negative electrode active layers decreases layer by layer in the direction away from the negative electrode current collector. The macroporous structure is conducive to reducing the expansion behavior of the material during the cycle, and the mesoporous structure is conducive to the embedding of lithium ions. The macroporous structures are controlled to gradually decrease in the direction away from the current collector, and the mesoporous structures gradually increase, so that lithium ions are more easily embedded in the negative electrode active material, improving the kinetic performance, wetting performance and cycle performance of the battery. The expansion behavior of the material during the cycle is reduced by the macroporous structure in the negative electrode active material in the direction close to the current collector reduces, thereby further improving the cycle performance. Large volume expansion of the active material during the cycle is avoided, resulting in poor adhesion between the negative electrode active material and the current collector, thereby affecting electron transmission and causing deterioration of the cycle performance.

In some embodiments, the negative electrode active layer is multi-layered, and the thickness of each negative electrode active layer decreases layer by layer in the direction away from the negative electrode current collector. This setting is more conducive to improving the liquid absorption capacity and electronic conductivity of the negative electrode sheet, and balancing the energy density and kinetic performance of the battery.

In some embodiments, the negative electrode sheet comprises a negative electrode current collector and a first negative electrode active layer and a second negative electrode active layer sequentially arranged on the surface of the negative electrode current collector. The first negative electrode active layer satisfies: $4.5 \leq B/A \leq 5.0$; the second negative electrode active layer satisfies: $3.0 \leq B/A < 4.5$, which is more conducive to improving the liquid absorption capacity and electronic conductivity of the negative electrode sheet, and balancing the energy density and kinetic performance of the battery. It can be understood that in the first negative electrode active layer, B/A comprises but is not limited to 4.5, 4.6, 4.7, 4.8, 4.9 or 5.0. In the second negative electrode active layer, B/A comprises but is not limited to 3.0, 3.1, 3.2, 3.3, 3.4, 3.5, 3.6, 3.7, 3.8, 3.9, 4.0, 4.1, 4.2, 4.3 or 4.4. For example, the first negative electrode active layer satisfies: $4.5 \leq B/A \leq 5.0$; and the second negative electrode active layer satisfies: $3 \leq B/A \leq 3.5$.

In some embodiments, the thickness ratio of the first negative electrode active layer to the second negative electrode active layer is 1:(0.3~1.1). The upper layer active material is configured to improve the wetting performance of the battery and improve the cycle performance; and the lower layer active material is configured to reduce the expansion behavior of the material during the cycle, and further improve the cycle performance. It can be understood that the thickness ratio of the first negative electrode active layer to the second negative electrode active layer comprises but is not limited to 1:0.3, 1:0.4, 1:0.5, 1:0.6, 1:0.7, 1:0.8, 1:0.9, 1:1.0, 1:1.075 or 1:1.1. In some examples, the thickness ratio of the first negative electrode active layer to the second negative electrode active layer is 1:(0.4~1). Further in some examples, the thickness ratio of the first negative electrode active layer to the second negative electrode active layer is 1:(0.4~0.98).

In some embodiments, each of the negative electrode active layers also independently comprises a negative electrode conductive agent and a negative electrode binder. In each of the active layers, the mass percentage of the negative electrode active material is independently 75% to 95%, the mass percentage of the negative electrode conductive agent is independently 2% to 15%, and the mass percentage of the negative electrode binder is independently 3% to 10%.

It can be understood that in the negative electrode active layer, the mass percentage of the negative electrode active material is 75% to 95%, comprising but not limited to 75%, 80%, 85%, 90%, 92%, 93%, 94%, 94.5%, 95%; the mass percentage of the negative electrode conductive agent is 2% to 15%, comprising but not limited to 2%, 2.2%, 2.5%, 2.8%, 3%, 3.2%, 3.5%, 3.6%, 3.8%, 4.0%, 4.5%, 5%, 6%, 7%, 8%, 9%, 10%, 11%, 12%, 13%, 14% or 15%; and the mass percentage of the negative electrode binder is 3% to 10%, comprising but not limited to 3%, 3.2%, 3.5%, 3.6%, 3.8%, 4.0%, 4.5%, 5%, 6%, 7%, 8%, 9% or 10%.

In some embodiments, each of the negative electrode conductive agents is selected from at least one of carbon nanotubes, carbon nanofibers, conductive graphite, graphene, acetylene black and carbon black, and these conductive agents have the advantages of high conductivity and low resistance. Further, carbon black is selected from at least one of Ketjen black, channel black, furnace black and thermal black.

In some embodiments, each of the negative electrode binders is selected from at least one of styrene-butadiene rubber, carboxymethyl cellulose, polyacrylic acid and polyacrylate, which can better adhere and retain the negative electrode active material on the current collector, enhance the electronic contact between the negative electrode active material and the conductive agent, and between the negative electrode active material and the current collector, and can better disperse, thicken, suspend, bond and facilitate lithium ion transmission. In some examples, each of the negative electrode binders is sodium carboxymethyl cellulose, such as a mixture of one or two of sodium carboxymethyl cellulose and lithium carboxymethyl cellulose.

In some embodiments, the negative electrode current collector is selected from metal foil or porous metal sheet. In some examples, the current collector is metal foil, such as copper foil or aluminum foil. In some examples, the current collector is copper foil.

In addition, the present disclosure also provides a method for preparing the above-mentioned negative electrode sheet.

In some embodiments, the method for preparing the above-mentioned negative electrode sheet comprises the following steps:

S100: preparing a slurry according to the design of the above-mentioned negative electrode sheet.
S200: preparing a negative electrode active layer by coating the slurry on the surface of the negative electrode current collector.

In some embodiments, the above-mentioned negative electrode sheet comprises multiple active layers, and the method for preparing the negative electrode sheet comprises the following steps:

S100: preparing a first slurry and a second slurry respectively according to the design of the above-mentioned negative electrode sheet.
S200: preparing the first negative electrode active layer and the second negative electrode active layer by coating the first slurry and the second slurry on the surface of the negative electrode current collector.

In some embodiments, the first slurry and the second slurry may be coated sequentially in step S200, or the first slurry and the second slurry may be coated simultaneously by a double-layer coating machine.

In some embodiments, in step S200, the coated first slurry and the second slurry are dried and cold pressed to form the first negative electrode active layer and the second negative electrode active layer on the surface of the negative electrode current collector.

It can be understood that as the number of designed negative electrode active layers increases, the types of slurries also increase accordingly.

The present disclosure also provides an energy storage device, comprising the negative electrode active material as described above, or comprising the negative electrode sheet as described above. It can be understood that the energy storage device described in the present disclosure has the beneficial effects described above for the negative electrode active material or the negative electrode sheet, which will not be repeated here. In general, the energy storage device has a higher energy density and better kinetic performance.

In some examples, the energy storage device is a battery. Further, the battery is a lithium-ion battery.

In one embodiment, the battery is selected from one of a button battery, a soft pack battery, a square battery and a cylindrical battery.

In one embodiment, the battery further comprises a positive electrode sheet. The positive electrode sheet comprises a positive electrode current collector and a positive electrode active layer disposed on the surface of the positive electrode current collector.

The positive electrode active layer comprises a positive electrode active material, a positive electrode conductive agent and a positive electrode binder.

In some embodiments, the positive electrode current collector is selected from metal foil or porous metal sheet. In some examples, the current collector is a metal foil, such as copper foil or aluminum foil. In some examples, the current collector is aluminum foil.

In one embodiment, the positive electrode active material is selected from one or a mixture of lithium iron phosphate, lithium manganese oxide, lithium cobalt oxide and lithium titanate.

In one embodiment, the positive electrode conductive agent is selected from one or a mixture of acetylene black, graphene, carbon nanotubes and carbon black.

In one embodiment, the positive electrode binder is selected from one or a mixture of polyvinylidene fluoride (PVDF), polyimide (PI), polyacrylic acid (PAA) and polytetrafluoroethylene (PTFE).

In one embodiment, the battery further comprises a separator. In some examples, the separator is made of polypropylene (PP) or polyethylene (PE).

In one embodiment, the battery further comprises an electrolyte.

In some examples, the solvent in the electrolyte is a mixed solvent of ethylene carbonate (EC), ethyl methyl carbonate (EMC) and diethyl carbonate (DEC) in a volume ratio of 1:1:1. The lithium salt in the electrolyte is $LiPF_6$, and further, the concentration in the electrolyte is 1 mol/L.

The present disclosure also provides a method for preparing a battery, comprising the following steps:

(1) Preparation of a positive electrode sheet:

The positive electrode active material, the positive electrode conductive agent and the positive electrode binder are mixed in a solvent, stirred evenly and then uniformly coated on the positive electrode current collector, and the positive electrode sheet is obtained after drying. Materials such as metal foil or porous metal sheet can be used as the positive electrode current collector. In some examples, aluminum foil is used.

(2) Preparation of a negative electrode sheet:

A negative electrode active slurry is provided, and the components of the negative electrode active slurry comprise a negative electrode active material, a negative electrode conductive agent and a binder.
The negative electrode active slurry is coated on the surface of the negative electrode current collector to form a negative electrode active layer.

(3) Preparation of electrolyte:

Ethylene carbonate (EC), ethyl methyl carbonate (EMC) and diethyl carbonate (DEC) are mixed, and then the dried lithium salt is dissolved in the mixed organic solvent to prepare an electrolyte.
In some examples, the volume ratio of ethylene carbonate (EC), ethyl methyl carbonate (EMC) and diethyl carbonate (DEC) is 1:1:1. In some examples, the lithium salt is $LiPF_6$, and further, the concentration in the electrolyte is 1 mol/L.
(4) Providing a separator.

(5) Preparation of battery:

Assemble the positive electrode sheet, the negative electrode sheet and the separator and the electrolyte into a battery cell.
The present disclosure also provides an electricity-consumption device, comprising the energy storage device as described above, and the energy storage device supplies power to the electricity-consumption device. It can be understood that the electricity-consumption device described in the present disclosure has the beneficial effects described above for the negative electrode active material or the negative electrode sheet, which will not be repeated here. In some examples, the electricity-consumption device may comprise a plurality of battery packs composed of the lithium-ion batteries described above. In some examples, the electricity-consumption device may be a lighting fixture, etc.
The present disclosure is described below through specific embodiments. It should be noted that the following specific embodiments are only for illustrative purposes and do not limit the scope of the present disclosure in any way. In addition, unless otherwise specified, methods without specific conditions or steps are conventional methods, and the reagents and materials used can be obtained from commercial channels.

Embodiment 1

This embodiment provides a negative electrode active material and a preparation method thereof, a negative electrode sheet and a preparation method thereof, and a lithium battery and a preparation method thereof, as follows:

(1) Preparation of positive electrode sheet:

Add lithium iron phosphate, polyvinylidene fluoride (PVDF) and acetylene black in a mass ratio of 96:2:2 to NMP solvent and stir evenly, then coat it to the aluminum foil current collector, dry it, form a positive electrode active material layer on the aluminum foil current collector, and cut it into positive electrode sheets for use, wherein the surface density is 24 mg/cm$^2$ and the compaction density is 2.6 g/cm$^3$.

(2) Preparation of negative electrode sheet:

The coke raw material with a sulfur content of 2.2wt% is crushed and mixed to use as a carbon source raw material; the carbon source raw material, the catalyst ferroferric oxide, the conductive agent conductive carbon black, and the binder asphalt are mechanically fused for 25 minutes to obtain a mixed material; the mixed material is pressed under a pressure of 200MPa to form an isostatically pressed block; according to the parameters in Table 1, the isostatically pressed block is graphitized at 2900°C for 32h, and graphite with different pore structures is obtained by controlling different graphitization time, which is subsequently used as a negative electrode active material.
According to the parameters in Table 1, the negative electrode active material, conductive agent acetylene black, thickener (CMC), and binder (SBR) are mixed at a mass ratio of 96.4:1:1.2:1.4, and then deionized water is added to the resulting mixture, and the mixture is stirred under the action of a vacuum mixer until the system is uniform to obtain a negative electrode slurry; the negative electrode slurry is evenly coated on the surface of the copper foil of the negative electrode current collector, and then dried, cold pressed, and cut to obtain a negative electrode sheet with a surface density

of 12 mg/cm$^2$ and a compaction density of 1.5 g/cm$^3$.

(3) Preparation of electrolyte:

Ethylene carbonate (EC), ethyl methyl carbonate (EMC), and diethyl carbonate (DEC) are mixed at a volume ratio of 1:1:1, and then the fully dried lithium salt LiPF$_6$ is dissolved in a mixed organic solvent at a ratio of 1 mol/L to prepare an electrolyte.

(4) Preparation of separator:

A polyethylene film with a thickness of 12 μm is selected.

(5) Battery assembly:

Stack the above-mentioned positive electrode sheet, separator, and negative electrode sheet in order, so that the separator is between the positive electrode sheet and the negative electrode sheet to play an isolating role, add the above-mentioned electrolyte, and assemble into a button battery.

Embodiment 2

This embodiment is basically the same as Embodiment 1. The difference from Embodiment 1 is that the sulfur content and graphitization time of the coke raw material in the preparation method of the negative electrode active material are different, and the volume ratio of the mesopores and macropores in the negative electrode active material is different, that is, B$_1$/A$_1$ is different, see Table 1 for details.

Embodiment 3

This embodiment is basically the same as Embodiment 1. The difference from Embodiment 1 is that the sulfur content and graphitization time of the coke raw material in the preparation method of the negative electrode active material are different, and the volume ratio of the mesopores and macropores in the negative electrode active material is different, that is, B$_1$/A$_1$ is different, see Table 1 for details.

Embodiment 4

This embodiment is basically the same as Embodiment 1, and the difference from Embodiment 1 is that the sulfur content and graphitization time of the coke raw material in the preparation method of the negative electrode active material are different, and the volume ratio of the mesopores and macropores in the negative electrode active material is different, that is, B$_1$/A$_1$ is different, see Table 1 for details.

Embodiment 5

This embodiment is basically the same as Embodiment 1, and the difference from Embodiment 1 is that the sulfur content and graphitization time of the coke raw material in the preparation method of the negative electrode active material are different, and the volume ratio of the mesopores and macropores in the negative electrode active material is different, that is, B$_1$/A$_1$ is different, see Table 1 for details.

Embodiment 6

This embodiment is basically the same as Embodiment 5, and the difference from Embodiment 5 is that two negative electrode active materials are prepared in this embodiment, and the negative electrode sheet of this embodiment comprises two layers of negative electrode active layers, as follows:

(1) Preparation of positive electrode sheet:

Same as Embodiment 5.

(2) Preparation of negative electrode sheet:

The coke raw material with a sulfur content of 4.3wt% is crushed and mixed to use it as a carbon source raw material; the carbon source raw material, the catalyst ferroferric oxide, the conductive agent conductive carbon black, and the binder asphalt are mechanically fused for 25 minutes to obtain a mixture; the mixture is pressed under a pressure of 200MPa to form an isostatically pressed block; according to the parameters in Table 1, the isostatically pressed block is graphitized at 2900°C for 16h, and graphite with different pore structure is obtained by controlling different graphitization time. The graphite with different pore structure is subsequently used as the first negative electrode active material.

The coke raw material with a sulfur content of 2.6wt% is crushed and mixed to use it as a carbon source raw material; the carbon source raw material, the catalyst ferroferric oxide, the conductive agent conductive carbon black and the binder asphalt are mechanically fused for 25 minutes to obtain a mixture; the mixture is pressed under a pressure of 200MPa to form an isostatically pressed block; according to the parameters in Table 1, the isostatically pressed block is graphitized at 2900°C for 27h, and graphite with different pore structure is obtained by controlling different graphitization time. The graphite with different pore structure is subsequently used as the second negative electrode active material.

According to the parameters in Table 1, the first negative electrode active material, the conductive agent acetylene black, the thickener (CMC), and the binder (SBR) are mixed at a mass ratio of 96.4:1:1.2:1.4, and then deionized water is added to the mixture formed, and the system is stirred under the action of a vacuum mixer until the system is uniform to obtain a negative electrode slurry; the negative electrode slurry is evenly coated on the surface of the copper foil of the negative electrode current collector, and then dried to obtain to the first negative electrode active layer. The second negative electrode active material, conductive agent acetylene black, thickener (CMC), binder (SBR) are mixed in a mass ratio of 96.4:1:1.2:1.4, and then deionized water is added to the mixture, and the system is stirred under the action of a vacuum mixer until the system is uniform to obtain a negative electrode slurry; the negative electrode slurry is evenly coated on the surface of the first negative electrode active layer, and then dried, cold pressed, and cut to obtain a surface density of $12mg/cm^2$ and a compaction density of $1.5g/cm^3$.

(3) Preparation of electrolyte:

Ethylene carbonate (EC), ethyl methyl carbonate (EMC), and diethyl carbonate (DEC) are mixed in a volume ratio of 1:1:1, and then the fully dried lithium salt $LiPF_6$ is dissolved in a mixed organic solvent at a ratio of 1mol/L to prepare an electrolyte.

(4) Preparation of separator:

A polyethylene film with a thickness of 12 microns is selected.

(5) Battery assembly:

Stack the above-mentioned positive electrode sheet, separator, and negative electrode sheet in order, so that the separator is between the positive electrode sheet and the negative electrode sheet to play an isolating role, add the above-mentioned electrolyte, and assemble into a button battery.

Embodiment 7

This embodiment is basically the same as Embodiment 6, and the difference is that the thicknesses of the first negative electrode active layer and the second negative electrode active layer are changed in this embodiment, as shown in Table 1.

Embodiment 8

This embodiment is basically the same as Embodiment 6, and the difference is that the thicknesses of the first negative electrode active layer and the second negative electrode active layer are changed in this embodiment, as shown in Table 1.

Embodiment 9

This embodiment is basically the same as Embodiment 6, and the difference is that the thicknesses of the first negative electrode active layer and the second negative electrode active layer are changed in this embodiment, as shown in Table 1.

Embodiment 10

This embodiment is basically the same as Embodiment 6, and the difference is that the thicknesses of the first negative electrode active layer and the second negative electrode active layer are changed in this embodiment, as shown in Table 1.

Embodiment 11

This embodiment is basically the same as Embodiment 6, and the difference is that the thicknesses of the first negative electrode active layer and the second negative electrode active layer are changed in this embodiment, as shown in Table 1.

Embodiment 12

This embodiment is basically the same as Embodiment 6, and the difference is that the thicknesses of the first negative electrode active layer and the second negative electrode active layer are changed in this example, as shown in Table 1.

Embodiment 13

This embodiment is basically the same as Embodiment 7, and the difference is that the sulfur content and graphitization time of the coke raw material in the preparation method of the second negative electrode active material are changed in this embodiment, that is, the ratio of $B_2/A_2$ in the second negative electrode active layer is changed, as shown in Table 1.

Embodiment 14

This embodiment is basically the same as Embodiment 7, and the difference is that the sulfur content and graphitization time of the coke raw material in the preparation method of the second negative electrode active material are changed in this embodiment, that is, the ratio of $B_2/A_2$ in the second negative electrode active layer is changed, as shown in Table 1.

Comparative Example 1

This comparative example is basically the same as Embodiment 1, and the different from Embodiment 1 is that the sulfur content and graphitization time of the coke raw material in the preparation method of the negative electrode active material are different, and the volume ratio of the mesopores and macropores in the negative electrode active material is different, that is $B_1/A_1$ is different, as shown in Table 1.

Comparative Example 2

This comparative example is basically the same as Embodiment 1, and the different from Embodiment 1 is that the sulfur content and graphitization time of the coke raw material in the preparation method of the negative electrode active material are different, and the volume ratio of the mesopores and macropores in the negative electrode active material is different, that is $B_1/A_1$ is different, as shown in Table 1.

Test:

(1) Pore size distribution of negative electrode active material:
The test instrument is ASAP2460-physical adsorption analyzer. The sample after drying and degassing is placed in liquid nitrogen, and different test pressures are adjusted to measure the adsorption amount of nitrogen respectively, and the adsorption and desorption isotherms are drawn. The shape of the pore is determined according to the shape of the hysteresis loop, and the pore size distribution curve is obtained according to different pore models. The original data of pore size distribution are imported into the plotting software, and the peak area of each part is calculated by the peak fitting method, which corresponded to the number of parameters A and B;
(2) Investigating battery performance:

1) Charging and discharging performance test conditions: At room temperature (25°C), the lithium-ion batteries obtained in the comparative example and the embodiment are charged to 3.65V at a constant power rate of 0.5P (P is power, P=nominal capacity×3.2V), left for 5 minutes, and then discharged to 2.5V at a rate of 0.5P. The discharge capacity is measured, and this is regarded as one cycle. The capacity retention rate (%) is calculated as follows:

It can be understood that 2000 cls means to cycle 2000 times, that is, perform 2000 cycles.

2000 cls capacity retention rate (%) = 2000th cycle discharge capacity/initial discharge capacity (i.e., the first discharge capacity) × 100%.

2000 cls cycle expansion rate = (battery thickness after 2000th cycle discharge - battery thickness after first discharge)/battery thickness after first discharge × 100%.

2) Lithium plating test

At 25°C, the batteries prepared in the embodiment and comparative example are charged to 3.65V at a rate of 0.5C and discharged to 2.5V at a rate of 0.5C. After three cycles of full charge and discharge tests, the batteries prepared in the embodiment and comparative example are discharged to 2.5V at a rate of 1C and charged to 3.65V at 1C. After 10 cycles, the batteries are disassembled to check the lithium plating.

Determination of lithium plating degree: determination is made by judging the lithium plating area on the surface of the electrode; lithium plating area 0%: no lithium plating; 0% < lithium plating area≤20%: slight lithium plating; 20%≤lithium plating area≤50%: moderate lithium plating; lithium plating area > 50%: severe lithium plating.

The negative electrode active materials, main parameters of the preparation method, negative electrode active layer composition, and lithium-ion battery composition and test data in Embodiments 1 to 14 and Comparative Examples 1 to 2 are all recorded in Table 1.

Table 1

| Group | First negative electrode active layer | | | | Second negative electrode active layer | | | | First negative electrode active material | | Second negative electrode active material | | Performance | | | |
|---|---|---|---|---|---|---|---|---|---|---|---|---|---|---|---|---|
| | Thickness/nm | $B_1$ | $A_1$ | $B_1/A_1$ | Thickness/nm | $B_2$ | $A_2$ | $B_2/A_2$ | Sulfur content of coke raw material /wt % | Graphitization time /h | Sulfur content of coke raw material /wt % | Graphitization time /h | Cycle capacity retention rate /% | Cycle expansion rate /% | Lithium plating situation | Initial efficiency/% |
| Embodiment 1 | 110 | 0.16 | 0.051 | 3.04 | - | - | - | - | 2.2 | 32 | - | - | 93.69 | 29.46 | No lithium plating | 90.17 |
| Embodiment 2 | 110 | 0.2 | 0.062 | 3.29 | - | - | - | - | 2.6 | 27 | - | - | 94.68 | 28.27 | No lithium plating | 90.23 |
| Embodiment 3 | 110 | 0.24 | 0.065 | 3.75 | - | - | - | - | 3.0 | 25 | - | - | 93.47 | 27.55 | No lithium plating | 89.92 |
| Embodiment 4 | 110 | 0.22 | 0.05 | 4.36 | - | - | - | - | 3.5 | 21 | - | - | 93.35 | 26.79 | No lithium plating | 90.02 |
| Embodiment 5 | 110 | 0.23 | 0.046 | 4.91 | - | - | - | - | 4.3 | 16 | - | - | 93.12 | 26.32 | No lithium plating | 90.13 |
| Embodiment 6 | 81 | 0.23 | 0.046 | 4.91 | 29 | 0.2 | 0.062 | 3.29 | 4.3 | 16 | 2.6 | 27 | 94.58 | 23.35 | No lithium plating | 90.32 |
| Embodiment 7 | 78 | 0.23 | 0.046 | 4.91 | 32 | 0.2 | 0.062 | 3.29 | 4.3 | 16 | 2.6 | 27 | 96.10 | 23.76 | No lithium plating | 90.25 |
| Embodiment 8 | 67 | 0.23 | 0.046 | 4.91 | 43 | 0.2 | 0.062 | 3.29 | 4.3 | 16 | 2.6 | 27 | 97.22 | 25.25 | No lithium plating | 89.86 |

EP 4 553 925 B1

| Group | First negative electrode active layer | | | | Second negative electrode active layer | | | | First negative electrode active material | | Second negative electrode active material | | Performance | | | |
|---|---|---|---|---|---|---|---|---|---|---|---|---|---|---|---|---|
| | Thickness/nm | $B_1$ | $A_1$ | $B_1/A_1$ | Thickness/nm | $B_2$ | $A_2$ | $B_2/A_2$ | Sulfur content of coke raw material /wt % | Graphitization time /h | Sulfur content of coke raw material /wt % | Graphitization time /h | Cycle capacity retention rate /% | Cycle expansion rate /% | Lithium plating situation | Initial efficiency /% |
| Embodiment 9 | 64 | 0.2 3 | 0.0 46 | 4.9 1 | 46 | 0.2 | 0.0 62 | 3.29 | 4.3 | 16 | 2.6 | 27 | 96.3 9 | 24.8 9 | No lithium plating | 89.7 3 |
| Embodiment 10 | 59 | 0.2 3 | 0.0 46 | 4.9 1 | 51 | 0.2 | 0.0 62 | 3.29 | 4.3 | 16 | 2.6 | 27 | 96.1 5 | 25.6 3 | No lithium plating | 89.7 5 |
| Embodiment 11 | 56 | 0.2 3 | 0.0 46 | 4.9 1 | 54 | 0.2 | 0.0 62 | 3.29 | 4.3 | 16 | 2.6 | 27 | 95.8 3 | 26.1 7 | No lithium plating | 89.5 3 |
| Embodiment 12 | 53 | 0.2 3 | 0.0 46 | 4.9 1 | 57 | 0.2 | 0.0 62 | 3.29 | 4.3 | 16 | 2.6 | 27 | 93.2 3 | 30.2 8 | No lithium plating | 87.2 2 |
| Embodiment 13 | 78 | 0.2 3 | 0.0 46 | 4.9 1 | 32 | 0.1 9 | 0.0 66 | 2.9 | 4.3 | 16 | 2.2 | 30 | 94.7 5 | 24.9 7 | No lithium plating | 89.9 2 |
| Embodiment 14 | 78 | 0.2 3 | 0.0 46 | 4.9 1 | 32 | 0.2 1 | 0.0 52 | 4 | 4.3 | 16 | 3.5 | 18 | 94.5 6 | 24.1 5 | No lithium plating | 90.0 8 |
| Comparative example 1 | 110 | 0.2 5 | 0.0 38 | 6.5 8 | - | - | - | - | 4.7 | 18 | - | - | 89.3 5 | 33.4 1 | Slight lithium plating | 89.1 5 |

(continued)

| Group | First negative electrode active layer | | | Second negative electrode active layer | | | | First negative electrode active material | | Second negative electrode active material | | Performance | | | |
|---|---|---|---|---|---|---|---|---|---|---|---|---|---|---|---|
| | Thickness/nm | $B_1$ | $A_1$ | $B_1/A_1$ | Thickness/nm | $B_2$ | $A_2$ | $B_2/A_2$ | Sulfur content of coke raw material /wt % | Graphitization time /h | Sulfur content of coke raw material /wt % | Graphitization time /h | Cycle capacity retention rate /% | Cycle expansion rate /% | Lithium plating situation | Initial efficiency/% |
| Comparative example2 | 110 | 0.11 | 0.042 | 2.72 | - | - | - | - | 1.8 | 22 | - | - | 90.16 | 31.52 | No lithium plating | 90.28 |

Note: "—" in Table 1 means none.

16

As can be seen from Table 1, when B/A is lower than the lower limit, the percentage of macropores is small, and the expansion during the cycle destroys the interlayer structure of graphite, resulting in reduced cycle performance; when B/A is higher than the upper limit, the percentage of small pores is small, the kinetic performance is poor, and slight lithium plating occurs during the cycle, resulting in reduced cycle performance.

As can be seen from the comparative example, when the thickness of the upper layer is too high, although the wetting performance of the electrode sheet can be improved, the expansion of the electrode sheet causes the active material to be peeled off from the current collector, resulting in reduced cycle performance; when the thickness of the upper layer is too low, the wetting performance is poor, resulting in increased polarization inside the battery cell, lithium plating, and reduced cycle performance.

The technical features of the above-mentioned embodiments can be combined arbitrarily. To make the description concise, all possible combinations of the technical features in the above-mentioned embodiments are not described. However, as long as there is no contradiction in the combination of these technical features, they should be considered to be within the scope of this specification.

**Claims**

1. A negative electrode active material, comprising mesopores with a pore size of 2nm to 50nm,

   **characterised in that**, the negative electrode active material comprises macropores with a pore size of 100nm to 200nm;
   wherein a percentage of a total volume of mesopores to a total volume of the negative electrode active material is A, a percentage of a total volume of macropores to the total volume of the negative electrode active material is B, and B/A satisfies: $3.0 \leq B/A \leq 5.0$, wherein values of A and B are measured using nitrogen adsorption method.

2. The negative electrode active material according to claim 1, wherein a specific surface area of the negative electrode active material ranges from $1.0 m^2/g$ to $2.0 m^2/g$.

3. The negative electrode active material according to claim 1 or 2, wherein at least one of the following (1) to (2) is satisfied:

   (1) the negative electrode active material is selected from one or more of graphite, soft carbon, hard carbon and silicon compounds; or
   (2) sulfur content of the negative electrode active material is less than 5wt%.

4. A negative electrode sheet, comprising a negative electrode current collector and at least one negative electrode active layer disposed on a surface of the negative electrode current collector, each of the negative electrode active layers comprises the negative electrode active material according to any one of claims 1 to 3.

5. The negative electrode sheet according to claim 4, wherein the negative electrode active layer is single-layered and a thickness thereof ranges from 20nm to 120nm.

6. The negative electrode sheet according to claim 4, wherein the negative electrode active layer is multi-layered and meets at least one of the following requirements (1) to (2):

   (1) in a direction away from the negative electrode current collector, the percentage of the total macropore volume of the negative electrode active material in each of the negative electrode active layers decreases layer by layer; and
   (2) in the direction away from the negative electrode current collector, a thickness of each of the negative electrode active layers decreases layer by layer.

7. The negative electrode sheet according to claim 4, wherein the at least one negative electrode active layer comprises a first negative electrode active layer and a second negative electrode active layer sequentially arranged on the surface of the negative electrode current collector, and at least one of the following requirements (1) to (2) is met:

   (1) the first negative electrode active layer satisfies: $4.5 \leq B/A \leq 5.0$; the second negative electrode active layer satisfies: $3.0 \leq B/A < 4.5$; and
   (2) a thickness ratio of the first negative electrode active layer to the second negative electrode active layer is 1:(0.3~1.1).

**8.** The negative electrode sheet according to claim 7, wherein a thickness of the first negative electrode active layer ranges from 20nm to 90nm.

**9.** An energy storage device, comprising a negative electrode active material according to any one of claims 1 to 3, or comprising a negative electrode sheet according to any one of claims 5 to 8.

**10.** An electricity-consumption device, comprising an energy storage device according to claim 9, and the energy storage device supplies power to the electricity-consumption device.

**11.** A method for preparing a negative electrode active material according to claim 1, comprising:

forming a mixture containing a carbon source, a catalyst, a conductive agent and a binder to prepare a solid composite; and
graphitizing the solid composite to obtain negative electrode active materials with different pore structures by controlling different graphitization time.

**12.** The method according to claim 11, wherein a pressure of the forming process ranges from 150MPa to 250MPa.

**13.** The method according to claim 11, wherein a temperature of the graphitization process ranges from 2500°C to 3000°C, and time ranges from 15h to 50h.

**14.** The method according to claim 11, wherein the carbon source is a coke raw material, and sulfur content of the coke raw material is less than 5wt%.


**Patentansprüche**

**1.** Aktives Material einer negativen Elektrode umfassend Mesoporen mit einer Porengröße von 2 nm bis 50 nm,

**dadurch gekennzeichnet, dass** das aktive Material der negativen Elektrode Makroporen mit einer Porengröße von 100 nm bis 200 nm umfasst;
wobei ein prozentualer Anteil eines Gesamtvolumens an Mesoporen an einem Gesamtvolumen des aktiven Materials der negativen Elektrode A ist, ein prozentualer Anteil eines Gesamtvolumens an Makroporen am Gesamtvolumen des aktiven Materials der negativen Elektrode B ist und B/A die folgende Bedingung erfüllt: $3,0 \leq B/A \leq 5,0$, wobei Werte von A und B mittels eines Stickstoffadsorptionsverfahrens gemessen werden.

**2.** Aktives Material der negativen Elektrode gemäß Anspruch 1, wobei eine spezifische Oberfläche des aktiven Materials der negativen Elektrode im Bereich von $1,0 m^2/g$ bis $2,0 m^2/g$ liegt.

**3.** Aktives Material der negativen Elektrode gemäß Anspruch 1 oder 2, wobei mindestens eine der folgenden Bedingungen (1) bis (2) erfüllt ist:

(1) das aktive Material der negativen Elektrode ist ausgewählt aus einem oder mehreren der folgenden Stoffe: Graphit, weicher Kohlenstoff, harter Kohlenstoff und Siliziumverbindungen; oder
(2) ein Schwefelgehalt des aktiven Materials der negativen Elektrode beträgt weniger als 5 Gew.-%.

**4.** Negative Elektrodenfolie, umfassend einen negativen Elektrodenstromkollektor und mindestens eine aktive Schicht einer negativen Elektrode, die auf einer Oberfläche des negativen Elektrodenstromkollektors angeordnet ist, wobei jede der aktiven Schichten der negativen Elektrode das aktive Material der negativen Elektrode gemäß einem der Ansprüche 1 bis 3 umfasst.

**5.** Negative Elektrodenfolie gemäß Anspruch 4, wobei die aktive Schicht der negativen Elektrode einlagig ist und eine Dicke davon im Bereich von 20nm bis 120nm liegt.

**6.** Negative Elektrodenfolie gemäß Anspruch 4, wobei die aktive Schicht der negativen Elektrode mehrlagig ist und mindestens eine der folgenden Anforderungen (1) bis (2) erfüllt:

(1) in einer Richtung weg vom negativen Elektrodenstromkollektor nimmt der prozentuale Anteil des gesamten Makroporenvolumens des aktiven Materials der negativen Elektrode in jeder der aktiven Schichten der negativen Elektrode von Schicht zu Schicht ab; und

(2) in Richtung weg vom negativen Elektrodenstromkollektor nimmt eine Dicke jeder der aktiven Schichten der negativen Elektrode Schicht für Schicht ab.

7. Negative Elektrodenfolie gemäß Anspruch 4, wobei die mindestens eine aktive Schicht der negativen Elektrode eine erste aktive Schicht der negativen Elektrode und eine zweite aktive Schicht der negativen Elektrode umfasst, die nacheinander auf der Oberfläche des negativen Elektrodenstromkollektor angeordnet sind, und mindestens eine der folgenden Anforderungen (1) bis (2) erfüllt ist:

(1) die erste aktive Schicht der negativen Elektrode erfüllt: $4,5 \leq B/A \leq 5,0$; die zweite aktive Schicht der negativen Elektrode erfüllt: $3,0 \leq B/A < 4,5$; und

(2) ein Dickenverhältnis der ersten aktiven Schicht der negativen Elektrode zur zweiten aktiven Schicht der negativen Elektrode beträgt $1:(0,3\sim1,1)$.

8. Negative Elektrodenfolie gemäß Anspruch 7, wobei eine Dicke der ersten aktiven Schicht der negativen Elektrode zwischen 20nm und 90nm liegt.

9. Energiespeichervorrichtung umfassend ein aktives Material für eine negative Elektrode gemäß einem der Ansprüche 1 bis 3, oder umfassend eine negative Elektrodenfolie gemäß einem der Ansprüche 5 bis 8.

10. Stromverbrauchsvorrichtung, umfassend eine Energiespeichervorrichtung gemäß Anspruch 9, wobei die Energiespeichervorrichtung die Stromverbrauchseinrichtung mit Strom versorgt.

11. Verfahren zur Herstellung eines aktiven Materials einer negativen Elektrode gemäß Anspruch 1, umfassend:

Formen einer Mischung, die eine Kohlenstoffquelle, einen Katalysator, ein Leitmittel und ein Bindemittel enthält, um einen festen Verbundstoff herzustellen; und

Graphitisieren des festen Verbundstoffs, um durch Steuerung unterschiedlicher Graphitisierungszeiten aktive Materialien der negativen Elektrode mit unterschiedlichen Porenstrukturen zu erhalten.

12. Verfahren gemäß Anspruch 11, wobei ein Druck des Formungsprozesses im Bereich von 150MPa bis 250MPa liegt.

13. Verfahren gemäß Anspruch 11, wobei eine Temperatur des Graphitisierungsprozesses im Bereich von 2500°C bis 3000°C liegt und die Zeit im Bereich von 15h bis 50h liegt.

14. Verfahren gemäß Anspruch 11, wobei die Kohlenstoffquelle ein Kokserz ist und der Schwefelgehalt des Kokserzes weniger als 5 Gew.-% beträgt.

**Revendications**

1. Un matériau actif d'électrode négative, comprenant des mésopores d'une taille de 2 nm à 50 nm,

**caractérisée en ce que** le matériau actif d'électrode négative comprend des macropores d'une taille comprise entre 100 nm et 200 nm ;

dans laquelle un pourcentage d'un volume total de mésopores par rapport à un volume total du matériau actif d'électrode négative est A, un pourcentage d'un volume total de macropores par rapport au volume total du matériau actif de électrode négative est B, et B/A satisfait à la relation : $3,0 \leq B/A \leq 5,0$, des valeurs de A et B étant mesurées par la méthode d'adsorption d'azote.

2. Matériau actif d'électrode négative selon la revendication 1, dans lequel une zone de surface spécifique du matériau actif d'électrode négative est comprise entre 1,0 $m^2$/g et 2,0 $m^2$/g.

3. Matériau actif d'électrode négative selon la revendication 1 ou 2, dans lequel au moins l'une des conditions suivantes (1) à (2) est satisfaite :

(1) le matériau actif de l'électrode négative est choisi parmi un ou plusieurs des composés suivants : graphite, carbone tendre, carbone dur et composés de silicium ; ou

(2) teneur en soufre du matériau actif d'électrode négative est inférieure à 5 % en poids.

4. Feuille d'électrode négative, comprenant un collecteur de courant d'électrode négative et au moins une couche active d'électrode négative disposée sur une surface du collecteur de courant d'électrode négative, chacune des couches actives d'électrode négative comprenant le matériau actif d'électrode négative selon l'une quelconque des revendications 1 à 3.

5. Feuille d'électrode négative selon la revendication 4, dans laquelle la couche active d'électrode négative est monocouche et un épaisseur de celle-ci est comprise entre 20 nm et 120 nm.

6. Feuille d'électrode négative selon la revendication 4, dans laquelle la couche active d'électrode négative est multicouche et satisfait à au moins l'une des conditions (1) à (2) suivantes :

(1) dans une direction s'éloignant du collecteur de courant d'électrode négative, le pourcentage du volume total de macropores du matériau actif d'électrode négative dans chacune des couches actives d'électrode négative diminue couche par couche ; et

(2) dans la direction s'éloignant du collecteur de courant d'électrode négative, un épaisseur de chacune des couches actives d'électrode négative diminue couche par couche.

7. Feuille d'électrode négative selon la revendication 4, dans laquelle l'au moins une couche active d'électrode négative comprend une première couche active d'électrode négative et une deuxième couche active d'électrode négative disposées séquentiellement sur la surface du collecteur de courant d'électrode négative, et au moins l'une des conditions suivantes (1) à (2) est remplie :

(1) la première couche active d'électrode négative satisfait à : $4,5 \leq B/A \leq 5,0$; la deuxième couche active d'électrode négative satisfait à : $3,0 \leq B/A < 4,5$ ; et

(2) un rapport d'épaisseur entre la première couche active d'électrode négative et la deuxième couche active d'électrode négative est de 1 : (0,3~1,1).

8. Feuille d'électrode négative selon la revendication 7, dans laquelle un épaisseur de la première couche active d'électrode négative est comprise entre 20 nm et 90 nm.

9. Dispositif de stockage d'énergie, comprenant un matériau actif d'électrode négative selon l'une quelconque des revendications 1 à 3, ou comprenant une feuille d'électrode négative selon l'une quelconque des revendications 5 à 8.

10. Dispositif de consommation d'électricité, comprenant un dispositif de stockage d'énergie selon la revendication 9, et le dispositif de stockage d'énergie alimente en énergie le dispositif de consommation d'électricité.

11. Procédé de préparation d'un matériau actif d'électrode négative selon la revendication 1, comprenant :

la formation d'un mélange contenant une source de carbone, un catalyseur, un agent conducteur et un liant pour préparer un composite solide ; et

la graphitisation du composite solide pour obtenir des matériaux actifs d'électrode négative présentant différentes structures poreuses en contrôlant différents temps de graphitisation.

12. Procédé selon la revendication 11, dans lequel une pression du processus de formation est comprise entre 150 MPa et 250 MPa.

13. Procédé selon la revendication 11, dans lequel une température du processus de graphitisation est comprise entre 2500 °C et 3000 °C, et la durée est comprise entre 15 h et 50 h.

14. Procédé selon la revendication 11, dans lequel la source de carbone est une matière première de coke, et la teneur en soufre de la matière première de coke est inférieure à 5 % en poids.

**EP 4 553 925 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2023304151 A1
- US 2021057736 A1

- US 20090196816 A1